# EUROPEAN PATENT SPECIFICATION

(11) **EP 1 719 576 B1**
(45) Date of publication and mention of the grant of the patent: **02.04.2008**
(21) Application number: 06425289.3
(22) Date of filing: 02.05.2006
(51) Int. Cl.: B23Q 7/00, B23Q 7/10

(54) **A loading device for a machine tool or work centre and work centre including said loading device**
Ladevorrichtung für eine Werkzeugmaschine oder eine Arbeitsanlage und Arbeitsanlage mit einer solchen Ladevorrichtung
Dispositif d'alimentation pour une machine outil ou un centre d'usinage et centre d'usinage comprenant ledit dispositf d'alimentation

(30) Priority: 02.05.2005 IT FI20050085
(43) Date of publication of application: 08.11.2006
(73) Proprietor: Paolino Bacci S.R.L., 56021 Cascina, PI (IT)
(72) Inventor: Ruggieri, Alberto, 56025 Pontedera (Pisa) (IT)
(74) Representative: Mannucci, Michele

(56) References cited:
- EP-A- 0 960 687
- EP-A- 1 055 485
- EP-A- 1 479 477
- DE-A1- 10 108 134

## Description

### Technical Field

This invention deals with improvements to the loading devices for machine tools or work centres, specifically even if not exclusively dedicated to the working of long pieces, such as parts of wooden chairs or the like.

### Prior Art

In the field of wood machining centres or machine tools of varying shapes have been developed depending on the type of pieces to work and processes to be performed on them. These work centres or machine tools are fitted with loading devices configured in various ways to automatically load the workpieces.

EP-A-1055485 describes a machine tool or work centre for the machining of long symmetrical elements or components according to particularly fast working cycles. This work centre also includes a double loading device to arrange couples of workpieces in parallel on two opposite piece-carrying saddles.

EP-A-1.479.477 discloses a machine tool including a magazine for the workpieces to be worked, i.e. machined, and a movable blocking means, which pick up the workpieces from the magazine and transfer them on a carriage. The carriage is provided with own blocking devices, designed to block the workpieces and transfer them towards the work area. After machining, the machined or worked workpieces are transferred by said carriage again in front of the movable blocking means. The latter remove the worked (i.e. machined) workpieces from the carriage and transfer them towards a lifting table arranged underneath the magazine.

### Objects and summary of the invention

An aim of this invention is to provide an automatic or semi-automatic loading device, especially suited to loading long pieces, like chair parts, onto a work centre. Aim of an improved embodiment of the invention is to provide a loading device which can load and correctly position symmetrical pieces onto the same blocking elements using different reference surfaces for different pieces.

Substantially, according to the invention, a loading device is envisaged for loading long workpieces in a work centre or machine tool including in combination: a magazine for the pieces to work; a support underneath said magazine to receive single pieces to work from the magazine; blocking means to block the pieces to work, said blocking means being mobile in relation to the magazine to get close to it and remove the workpieces and move away from it and transfer the pieces towards a work area; unloading means to remove the worked pieces from said blocking means and transfer them to an area from where the worked pieces are removed.

As it will become clear from the description of an example of embodiment, the loading device so conceived allows to perform, with a limited number of elements, automatic loading of pieces to work and unloading of worked pieces. Part of the elements that participate in the removal of the pieces to work and unloading of worked pieces are also used to transfer pieces to the work area and to handle, according to numeric control axes, the piece being worked.

The support for the single pieces arranged below the magazine can be designed for example in a shape of one or more bars or shelves, possibly vertically mobile by means of piston cylinder actuators or similar means. However, this support can also be designed and produced in another way. For example an abutment surface can be provided, against which the piece is held by a pusher, a cursor driven by a piston cylinder actuator or of another kind, or any other system, which defines a waiting position of the single piece before inserting it into the blocking means.

An advantageous embodiment of the invention provides for the piece blocking meansto be mobile along a numeric control translation axis. This numeric control axis is advantageously also one of the numeric control axes of the machine tool or work centre to which the loading device is combined.

In a possible and avantageous embodiment of the invention, the blocking means for the workpieces is carried by a saddle which is mobile along at least one numeric control axis and preferably along two numeric control axes, for example two horizontal control axes, preferably orthogonal to one another, which preferably represent also two of the numeric control axes of the machine tool or work centre to which the loading device is combined.

Advantageously, a possible embodiment of the invention sees the blocking means defining a blocking position of the workpiece which is raised in relation to the saddle, to avoid the collision of tools of a work head against said saddle.

The movement along two numeric control axes of the saddle, on which the workpiece-blocking means is placed , is obtained, for example, with a configuration in which the saddle is supported on a carriage which is mobile along a numeric control axis, while the saddle is mobile on said carriagealong a further numeric control axis, said two numeric control axes being horizontal and preferably orthogonal to one another.

In an advantageousembodiment, the unloading means include horizontal moving bars, associated to resting surfaces, on which the rods deposit in an orderly fashion the worked pieces that are unloaded from the machine tool or work centre.

According to an advantageous embodiment of the device according to the invention the support for the workpieces, on which single pieces are deposited from the magazine (to be then engaged by the piece-blocking elements ), is arranged at a greater height than an unloading trajectory of the worked pieces, performed by the unloading means. Advantageously, the blocking means can define a blocking and piece working height, above that of the trajectory of the unloading means.

Preferably the height and distance of the blocking means is adjustable. Conveniently said means can include vertically mobile lower pushers cooperating with upper ledges. In a preferred embodiment of invention the lower pushers are arranged and controlled to lower and deposit the worked piece on the unloading means when said unloading means is in an extracted position for receiving the worked pieces. In this way the blocking elements participate in unloading the worked pieces.

According to a preferred embodiment of the invention, the blocking means includes a plurality of horizontally adjustable blocking elements , i.e. with a variable reciprocal distance. This adjustment, in addition to the vertical adjustment independent for each single blocking element, allows to equip the loading device in the most suitable way to the form of the workpieces. Practically, each blocking element can include an upright to which an upper ledge and a lower pusher are associated. Advantageously, each blocking element can be adjusted in a vertical direction autonomously and independently from the other blocking elements. For example the upright of each blocking element can be vertically adjusted to bring the respective upper ledge to a desired height. This allows to block the workpiece in such a way that it is supported in a position relatively high in relation to the piece-carrying saddle.

In an advantageous embodiment of the invention, at least one reference or abutment surface is associated to the blocking means, independent of the blocking means, which is produced and arranged in a way that the piece to block is referred to this surface with its own surface to which the working processes to be performed on the piece are referred. The reference or abutment surface is arranged so that the surface of the piece to which the working processes to be performed are referred remains fully free to be worked, after being blocked. This can be obtained, for example, by including a reference or abutment surface, which does not participate in the blocking of the pieces, and is not part of the blocking elements and against which the piece to work can be pushed and positioned before being blocked on the blocking means. The working occurs by distancing the piece from the reference or abutment surface.

According to a different aspect, the invention also deals with a work centre or machine tool including: at least a work head; a support for pieces to work, said support and said work head being mobile one with respect to the other according to a plurality of numeric control axes; and an unloading equipment according to one or more of the preceding claims.

Further advantageous features and embodiments of the present invention are indicated in the attached claims and will be described in greater detail later with reference to an example of embodiment.

### Brief description of the drawings

The invention is better understood following the description of the drawing which shows a practical non - restrictive embodiment of the invention. More specifically, the drawing shows:
Fig. 1 a front view of the work centre according to the invention;
Fig. 2 a side view according to II-II of Fig. 1;
Fig. 3 a plan view according to III-III of Fig. 1;
Fig. 4A and 4B two symmetrical legs of a chair, which can be worked with the work centre according to the invention;
Fig. 5 a plan view of a piece loading device for the work centre of Fig.1 to 3;
Fig. 6 a side view according to VI-VI of Fig. 5;
Fig. 7 a plan view similar to Fig. 5 with a different arrangement of the loading devices;
Fig. 8 a side view according to VIII-VIII of Fig. 7;
Fig. 9 an unloading sequence of a worked piece and loading of a piece to be worked ;
Fig. 10 and 11 illustrative sequences of the methods of reference of a piece in relation to the surfaces of the blocking means in two different situations.

### Detailed description of the of preferred embodiments of the invention

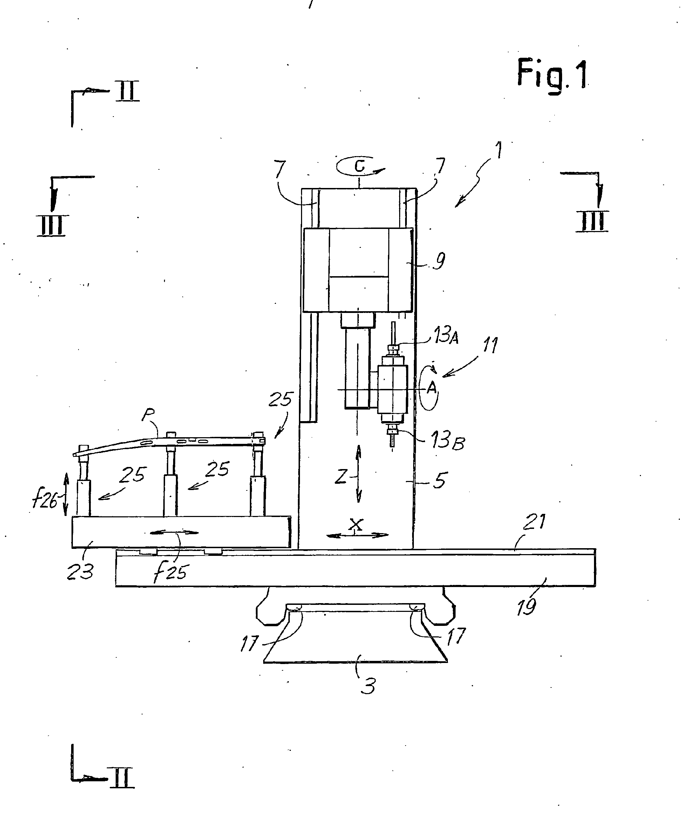

Fig.1 to 3 show a work centre to which the present invention is applied. In the context of this description and the attached claims the term work centre is also to be understood as encompassing machine tools and in general defines a group of elements and assembled parts with the function of moving reciprocally one in relation to the other a workpiece and one or more tools along numeric control axes, to perform multiple chip-removal operations on the workpieces with said tools.

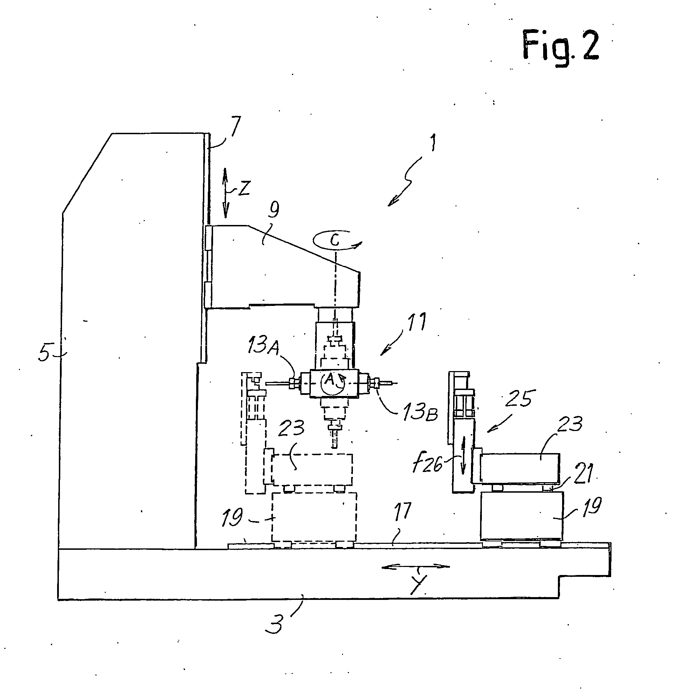

The work centre, generically indicated with 1, includes a horizontal base 3 with a vertical upright 5. The vertical upright 5 has vertical runners 7 for the movement of a saddle 9 carrying a work head 11. In this embodiment the head 11 has a double spindle with two tools 13A and 13B. It must also be understood that the head can have a different shape, for example it can be a cross-shaped head with four spindles for four different tools, with the axes of the spindles which intersect or are side by side. This solution is traced with a broken line in Fig. 2 where a side view of a head with four tools at 90°C and respective spindles is shown. Other shapes with a different number of tools are also possible. The spindles can advantageously be single or double electrical spindles. The work centre can be fitted with one or more magazines of interchangeable tools, not shown and known.

The movement along runners 7 of saddle 9 carrying the head 11 is a numeric control movement along a first vertical translation axis indicated by Z. Head 11 is a so-called bi-rotational head, that is fitted with a double movement of oscillation or rotation around two respective numeric-control oscillation or rotation axes. In the drawing the first numeric control rotation axis is indicated by C. It is a vertical rotation or oscillation axis, which is parallel to the numeric-control translation axis Z. A indicates the second numeric-control oscillation or rotation axis of head 11. Axis A is orthogonal to the two-spindle axis of head 11.

A runner 17 is provided on base 3 for the movement of a carriage 19. Carriage 19 has a runner 21 for the translation movement along carriage 19 of a piece-carrying saddle 23.

Saddle 23 moves along a second numeric control horizontal translation axis X along runner 21 which is integral with carriage 19. This last one translates along runner 17 according to a third numeric-control translation axis Y, horizontal and orthogonal to axis X. Overall, therefore, the work centre is a machine with five numeric control axes, three translation axes (X,Y,Z) and two oscillation axes (A,C). The tools move along axes A,C,Z and the pieces along axes X and Y.

Means to block the workpiece P is mounted on saddle 23. Advantageously, according to the example of realization illustrated, the blocking means has two or preferably (as in the drawing) three distinct blocking elements 25 which are substantially similar to one another.

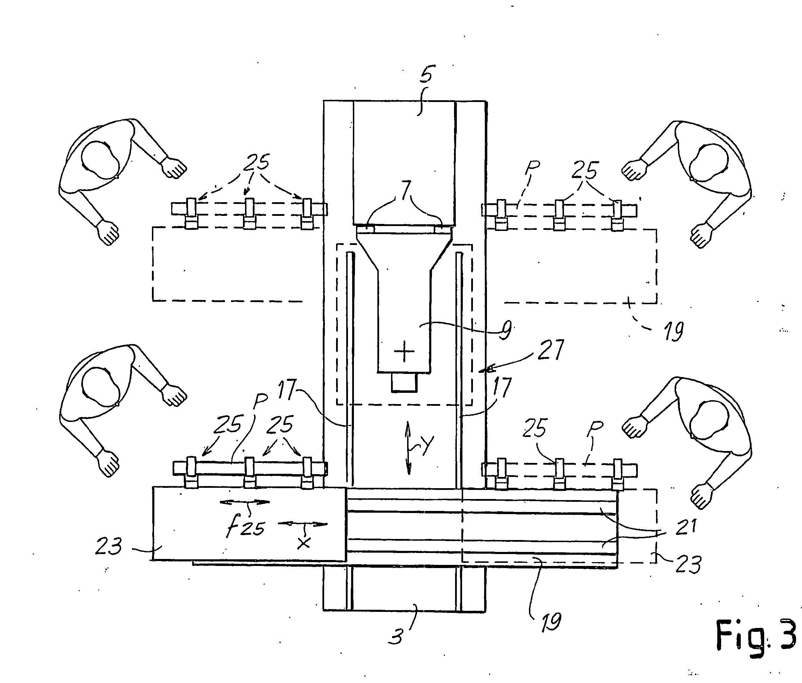

Each blocking element 25 is shaped like an upright and overhangs the saddle 23 (Fig. 2) on the side facing the fixed upright 5. The three blocking elements 25 are adjustable according to double arrow f25 (Fig. 1 and 3) in a direction parallel to the second translation axis X. Conveniently, in the example shown the blocking elements are also adjustable in a vertical direction according to double arrow f26 (Fig. 1 and 2). This double regulation or adjustment of the blocking elements makes it possible to arrange them in the most suitable positions to adapt to the shape of workpiece Po.

In the schematic examples of Fig. 1 to 3 the workpiece P is the rear leg of a chair, that is that element of the chair which also forms a support upright of the backrest. Piece P lies on an essentially vertical plane parallel to the numeric control axis X and is held at its ends by two blocking elements 25 and in an intermediary position by the third blocking element 25. This third intermediate blocking element is useful when pieces P to work are particularly long, like in the example shown. The possibility of using only two blocking elements 25 or more than three blocking elements 25, depending on the shape of the piece, is also possible. The same machine can be equipped with a variable number of blocking elements 25 according to the working processes to be performed.

As is clearly understood from the drawings of Fig. 1 to 3 piece P can be worked by the tools of head 11 on all sides except the lower one. Fig. 2 shows a full view of the loading position of the piece and the position to which the carriage 19 moves, to make tools of head 11 work the face of the piece P opposite the vertical upright 5, is shown with a broken line. By translating saddle 23 to the position shown in Fig. 1, the right end (in the drawing) of piece P can be worked. Translating instead the same saddle 23 in the position symmetrical to that shown in Fig. 1 it is possible to work the other end of the same piece.

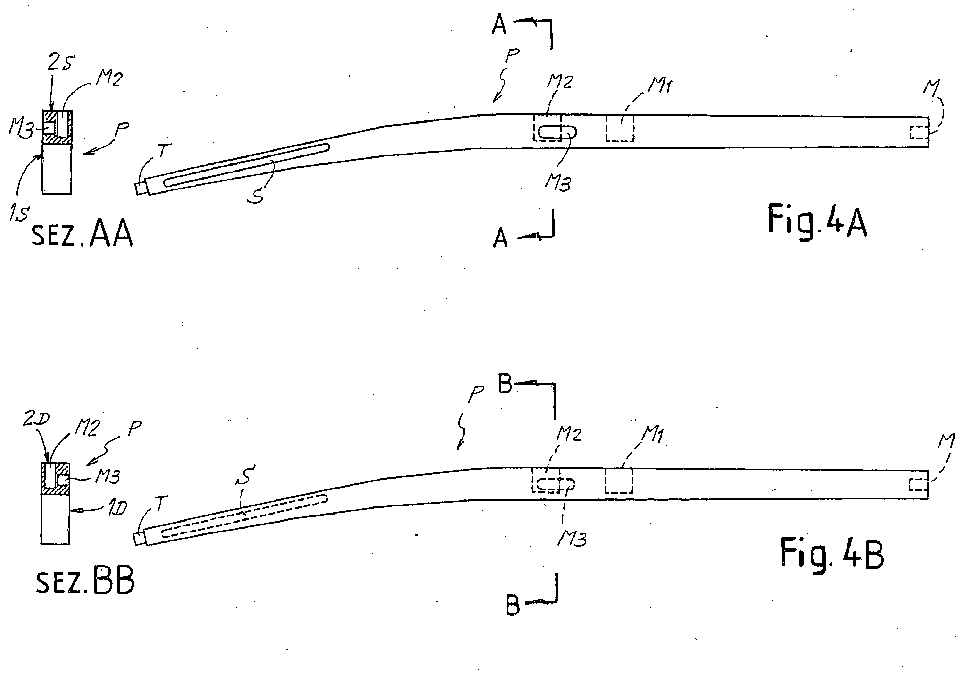

With this configuration it is possible to work pieces with the shape illustrated in Fig. 4A and 4B. Fig. 4A shows the rear left leg of a chair, seen laterally from the inside of the chair and the respective section according to A-A, while Fig. 4B shows the corresponding right leg seen from the outside, in addition to the cross section of the same leg according to B-B.

As can be observed in these illustrations both legs must be worked on multiple sides. The left leg of Fig. 4A has a tenon T at one end and a mortise M at the opposite end. Tenon T can be used for fixing the upper transversal element of the backrest of the chair, while mortise M can be used to fix a foot of the chair. A groove F close to tenon T is also provided to fix the backrest, while in the central area of the chair, further cavities or mortises M1, M2 and M3 are provided to fix the transversal connection components of the chair legs and seat support. These machined elements are arranged in a symmetrical manner on the two legs and are indicated with the same reference numbers in the two Fig. 4A and 4B.

The particular design of the work centre described makes it possible to reach all sides of the piece whether it be a left leg or a right leg, on which the work must be performed to make the tenons, mortises and grooves as described. The two pieces of Fig. 4A and 4B are mounted and blocked on saddle 23 by blocking elements 25 without the need to change the arrangement said elements 25.

This is obtained thanks to the fact that with movements along X, Y, Z, A, C the tools of head 11 can work all sides (excluding the lower one) of the piece.

Fig. 3 shows how the design of work centre 1 allows to arrange the loading means of the pieces to be worked and the unloading means of the worked pieces in four different positions, two for each side of base 3 and more precisely close to and laterally to upright 5, and at a distance from upright 5 close to the distal end of base 3. As upright 5 is fixed, the work area of head 11 can be easily enclosed within a guard 27 which defines the volume that can be reached by the tools of head 11 leaving the space on the side of the base 3 free to perform the loading and unloading operations simply by translating saddle 23 towards one or the other end of carriage 19.

This allows different loading devices to be used for the same work centre, which can also be arranged and maintained in a fixed position though being used alternatively according to the pieces being processed and/or the amount of pieces to work. For example two different loading devices can be used to load right and left elements of the chair. Or an automatic loading device can be present in one of the loading or unloading positions to work pieces in series and a manual or semi-automatic loading device in a different position, to work single pieces or small batches.

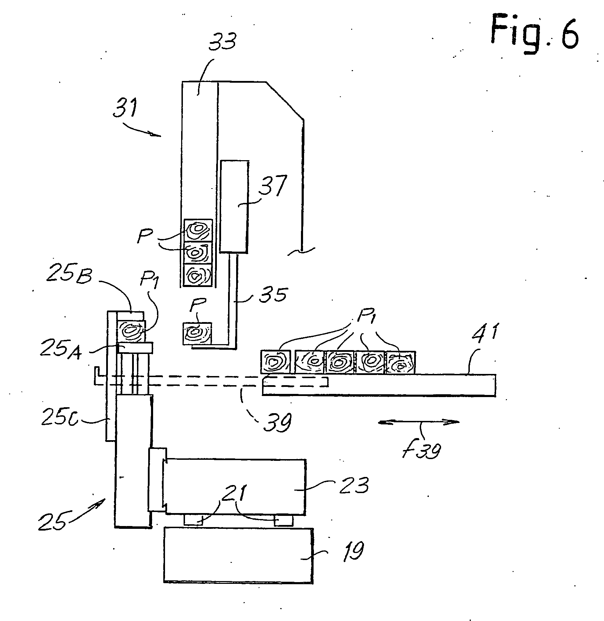

Figs. 6 to 11 show possible shapes of a loading device particularly suited to feeding the pieces to work into the machine tool or work centre 1 described to this point. It must however be understood that the same loading device could be used for work centres that are different to that shown and that the work centre 1 could be fitted with a loading device different to those illustrated in Fig. 6 onwards.

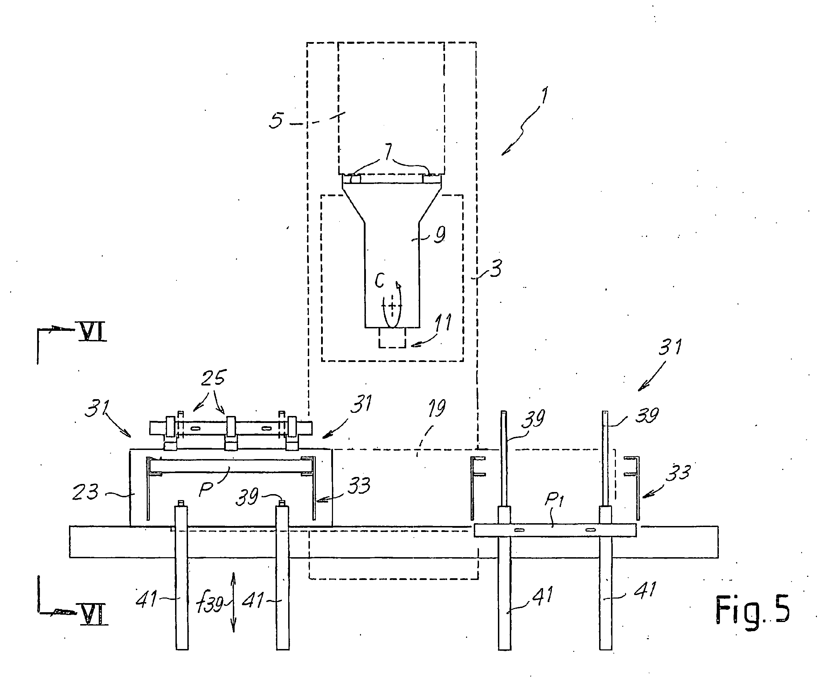

With reference to Figs. 5 and 6 in which the elements of the work centre are mainly shown in broken lines, the loading device, indicated with 31, has a magazine 33, in which pieces P to work are stacked. The pieces fall by gravity towards the lower end of magazine 33. Here suitable individualisation elements, known and not shown, transfer one piece P at a time to a couple of bars 35 that are vertically mobile and controlled by a piston-cylinder actuator 37. Bars 35 take single pieces P to work from the lower end of magazine 33 and bring them to the correct height to be blocked by blocking elements 25.

As the pieces may be non rectilinear (like for example in the case of the chair legs of Fig. 4A and 4B) bars 35 associated to the two ends of magazine 33 usually reach different heights that correspond to the heights at which blocking elements 25 of the ends are adjusted. Bars 35 can differ in number according to the type of pieces or type of loading device.

Unloading devices 39 are located under magazine 33 and have an alternate movement according to double arrow f39 to take the single worked pieces from blocking elements 25 and transfer them onto rests 41 defining unloading surfaces, where the worked pieces (indicated with P1 in Fig. 6) are aligned and removed by the operator or in another way. In the example shown rests 41 are also used as runners and housing for unloading devices 39, which are moved according to double arrow f39, by known means, for example a piston cylinder actuator, a pin and rack mechanism or similar.

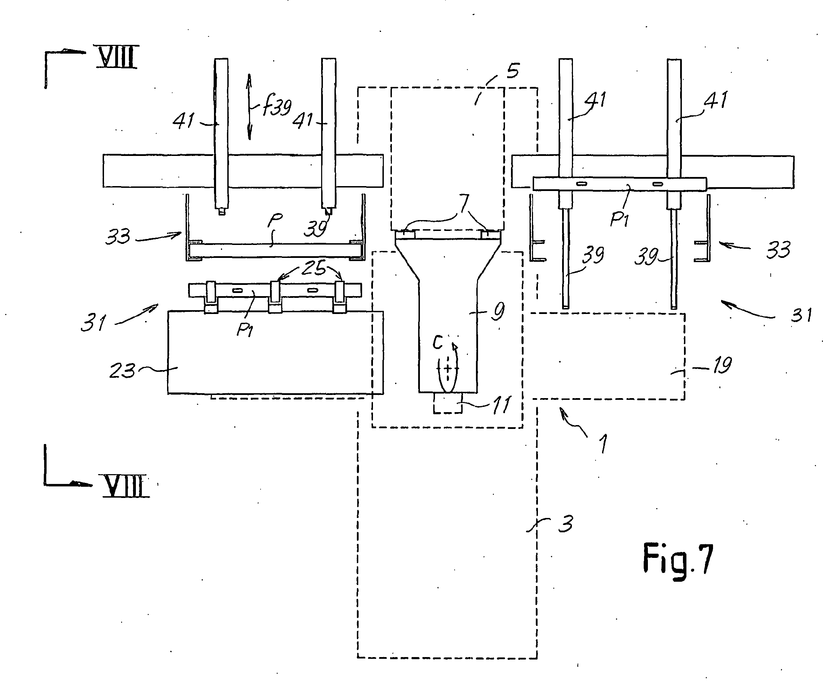

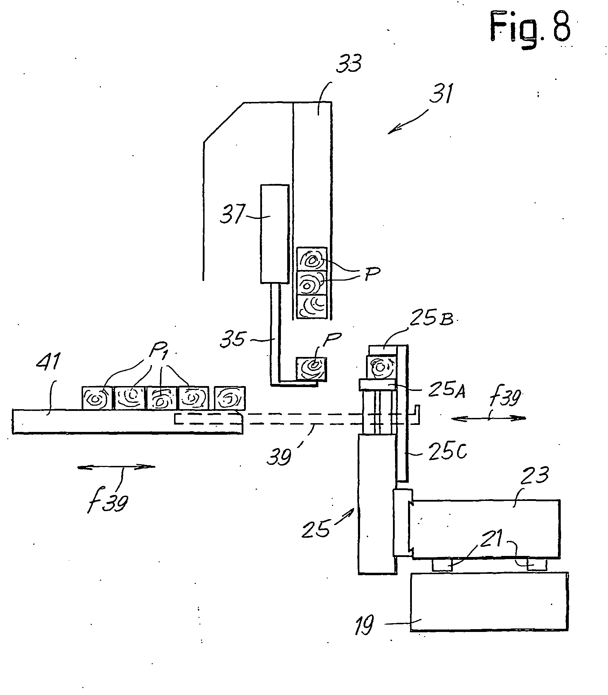

In the example shown in Fig. 5 two loading devices 31 are present and arranged symmetrically to base 3 of work centre 1 at a distance from upright 5. This is one of the feasible arrangements, being understood that according to the needs of the work centre user it could also be that a single loading device 31 is used. Fig. 7 and 8 show (still in plan and side view) a different arrangement of the same loading device 31 again in a double configuration, on both sides of the upright 3. This arrangement can be alternative to that of Fig. 5 and 6 or combined to it when more than two loading devices shall to be combined with the work centre 1. It is also possible to arrange two loading devices on the same work centre on the same side of base 3, one in one of the two positions indicated in Fig. 5 and the other in one of the two positions indicated in Fig. 7.

Equal numbers indicate equal or equivalent parts of Fig. 7, 8 and 5, 6 respectively.

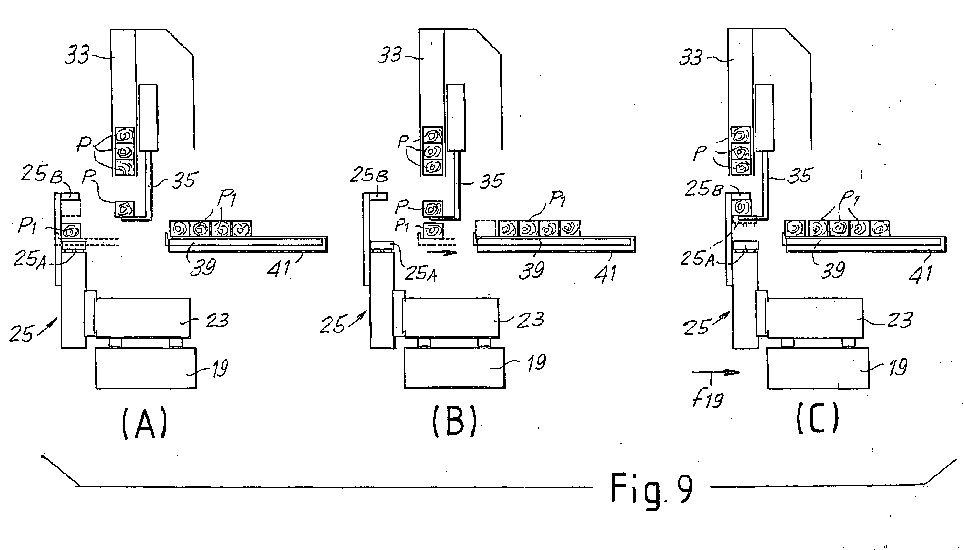

The unloading cycle of worked piece P1 and the loading of a piece P to be worked is shown in great detail in the sequence of Fig. 9A, 9B and 9C. One piece P to work is unloaded by magazine 33 onto bars 35, which are lowered to the height of blocking elements 25. The worked piece P1 is lowered by the downward movement of lower pushers 25A of blocking elements 25 to a height corresponding to that of unloading devices 39. These have been previously taken out up to the position outlined in Fig. 9A and carriage 19 is positioned at a distance from supports or rests 41 to allow the unloading devices 39 to be positioned below worked piece P1.

The height of worked piece P1 is lower than the height of bars 35, so that with a movement according to arrow f39 (Fig. 9B) the unloading devices 39 can translate worked piece P1 towards supports 41 making it pass under bars 35, which support the piece P which shall be machined at the next cycle. Subsequently carriage 19 translates according to arrow f19 in the direction of numeric control axis Y to bring blocking elements 25 below magazine 33, so that fixed upper ledges 25B of blocking elements 25 are placed above the piece to work supported by bars 35. The next lifting movement of lower pushers 25A (controlled by a piston-cylinder actuator, not shown, or by another actuator) lifts piece P to work blocking it between lower pushers 25A and upper ledges 25B. The latter can be adjusted in height, as mentioned above, so that in a blocked position the piece P to work takes on the desired position for performing subsequent machining of the sides of the piece.

It is clear according to what has been described to this point that loading device 31 makes it possible to load the pieces to work and unload the worked pieces exploiting the movement of the opening of blocking elements 25 and the translation along numeric control axis Y of carriage 19. Arranging two loading devices as shown in Fig. 5 or Fig. 7 the translation movement of saddle 23 according to the X axis also allows to bring blocking elements 25 to the same height of one or the other of the two loading devices and therefore to take for example two symmetrical pieces from one or the other of the two loading devices 31 placed on the two sides of base 3.

Herein above a description has been given of how the machine or work centre 1 works symmetrical pieces such as right and left chair legs (Fig. 4A,4B) without requiring adjustments of blocking elements 25. The symmetrical pieces can be blocked onto blocking elements 25 without changing the position of the latter. Nevertheless the right and left pieces must be positioned with reference to ledge surfaces or reference surfaces different for the two cases. More specifically the surfaces of the piece, in correspondence of which the piece itself must be rested on reference surfaces of the blocking equipment, are usually the surfaces on which chip removal machining is performed.

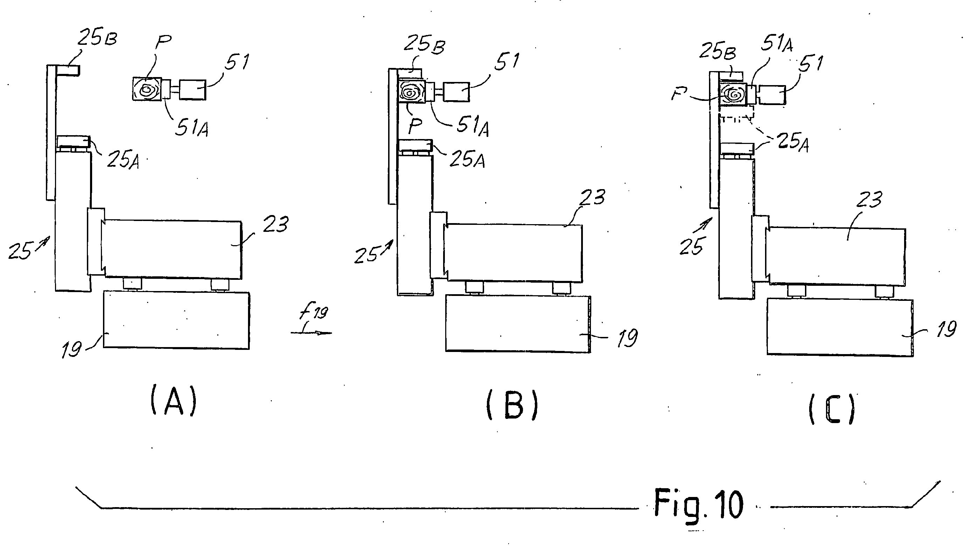

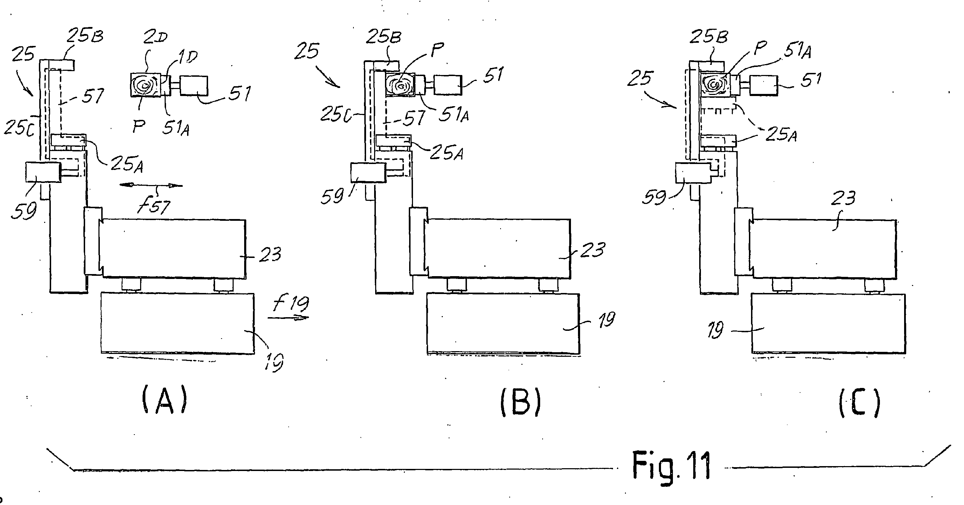

With the aim of using the same blocking tools, for blocking e.g. the right and left pieces of a chair referring them each time to the correct reference surface, the mechanisms shown in detail in Fig. 10 and 11 are used and omitted from the remaining illustrations for greater clarity of drawing.

In fact, with reference to Fig. 4A and 4B, for example, the piece of Fig. 4A (left chair leg) must be blocked on blocking elements 25 using as reference surfaces those indicated by arrows 1S (vertical surface) and 2S (horizontal surface). The right leg (Fig. 4B) on the other hand must be referred to surfaces 1D (vertical) and 2D (horizontal). As is evident from the description above, surfaces 2S and 2D are brought by lifting pushers 25A to abut against the same reference surfaces defined by the lower surface of fixed ledges 25B. Therefore, these reference surfaces 2S and 2D do not require different adjustments for the two symmetrical pieces of Fig. 4A and 4B.

On the other hand vertical reference surfaces of 1S and 1D must be rested on verification or reference surfaces of the machine different in both cases. Fig. 10 shows the method of positioning of piece P to work with reference to surfaces 2S and 1 S. This is obtained by means of piston cylinder actuators 51 (shown in Fig. 10 and 11 omitted in the remaining illustrations for clarity) which are part of loading device 31 and shown by way of example by bars 35. When the piece must be referred to surface 1S, it must abut against the lower surface of the fixed upper ledges 25B of single elements 25, and in addition thereto also against the lateral surface of each upright 25C of which the various fixed ledges 25B of blocking elements 25 are a part.

The sequence of Fig. 10A, 10B and 10C shows how this operation of reference and positioning of the piece comes about. In Fig.10A piece P is supported by bars 35 (not shown in Fig. 10) in front of blocking elements 25. These are translated from left to right (in the illustration) with a movement according to f19 along numeric control axis Y of carriage 19. With this movement uprights 25C of blocking elements 25 abut against piece P carried by bars 35. Stop surfaces 51A brought by the rods of piston-cylinder actuators 51 push piece P against the surfaces of uprights 25C directed towards the piece itself, so that this correctly bears against all uprights 25C of the different blocking elements 25.

The subsequent lifting movement of lower pusher 25A forces piece P against the lower surface of fixed ledge 25B of single elements 25. Within piston-cylinder actuators 51 there is a relatively limited pressure of the work fluid, so that piece P is correctly arranged and forced against uprights 25C for a correct reference of the piece itself.

Fig. 11 shows how a piece P symmetrical to that positioned with the sequence illustrated in Fig. 10A -10C is correctly positioned to the surfaces of reference 1D and 2D. In this case piece P is still presented, supported by bars 35, in front of blocking elements 25. These are fitted with vertical pushers 57 parallel to uprights 25C and shown in Fig. 11 but omitted for clarity of drawing in the remaining illustrations. Vertical pushers 57 are mobile according to double arrow f57 and controlled by piston cylinder actuator 59 brought by the piece-carrying saddle 23 or by blocking elements 25.

To position piece P correctly with reference to surfaces 2D and 1D, piston cylinder actuators 51 are blocked with pushers 51A in a set position and shutdown maintaining the pressure of the fluid within piston cylinder actuator 51 to a value able to exert on piece P a reaction force greater than the push exerted, by actuators 59 on the piece itself.

The movement of carriage 19 (Fig. 11A, 11B) along numeric control axis Y according to arrow f19 and the movement according to arrow f57 in the same direction of pushers 57 bring piece P to abut against pushers 51A associated with the rods of piston cylinder actuators 51, as shown in Fig. 11B. As the pressure in cylinders 51 is high, the cylinder rods do not withdraw but maintain the reference surface, which in this case is formed by the front side of pushers 51A turned towards uprights 25C, in the correct reference position. Further movement of carriage 19 according to f19 brings the device to the position of Fig.11C with a withdrawal of pushers 57, due to the prevalence of the pushing force of actuators 51 on the pushing force of actuators 59, which in this phase act essentially as pneumatic springs. Lifting of lower pushers 25A then pushes piece P to abut against upper ledges 25B of single blocking elements 25. With this sequence a piece P to work is correctly referred by its surfaces 1D and 2D to the lower surfaces of upper ledge 25B of each blocking element 25 and to the vertical surface of single pushers 51A.

The method of positioning of the piece described with reference to Fig. 11A-11C can be used not only in the case of right and left pieces, as in the example shown (Fig. 4A, 4B). It can also be used when the piece to work presents a machining which develops on a considerable length and typically as far as one end of the piece itself. For example, in the case of cavity or groove S, this could extend to the end of piece P on which tenon T is located. In this case it is impossible to rest the reference surface (that is the surface on which the groove must be made S) against a verification, rest or abutment surface, which remains in contact with the piece as it is worked, as this would hinder the machining process. In this case it is useful to use rest or verifications surfaces 51A which are independent of the blocking elements.

It is understood that the drawing shows only an example of embodiment of the invention, which can vary in the shapes and arrangements without getting away from the scope of the concept underlying the invention. Any presence of reference numbers in the attached claims has the aim of facilitating the reading of the claims with reference to the description and the drawing, and does not limit the scope of protection thereof.

## Claims

1. A loading device (31) for loading long workpieces in (P) a work centre or machine tool (1) including in combination: a magazine (33) for the workpieces to work (P); a support (35) underneath said magazine to receive single workpieces to work (P) from the magazine (33); blocking means (25) to block the workpieces (P), said blocking means (25) being mobile in relation to the magazine (33) to get close to it and remove the workpieces to work (P) from the support (35) and move away from it and transfer the workpieces to work (P) towards a work area, and to remove the worked workpieces (P1) from said work area; unloading device (39) able to remove the worked workpieces (P1) from said blocking means (25) and to transfer them to an area from where the worked workpieces (P1) can be removed.

2. Device (31) according to claim 1, wherein said blocking means (25) is mobile along at least one numeric control axis (Y).

3. Device (31) according to claim 2, wherein said numeric control axis (Y) is one of the numeric control axes of the machine tool or work centre (1) to which the device is associated.

4. Device (31) according to one of the preceding claims, wherein said blocking means (25) is supported by a saddle (23) which is mobile along at least one numeric control axis (X;Y).

5. Device (31) according to claim 4, wherein said blocking means (25) defines a workpiece-blocking position raised in relation to said saddle (23), to avoid the collision of tools of a work head against said saddle (23).

6. Device (35) according to claim 4 or 5 wherein said saddle (23) is supported on a carriage (19), said carriage (19) being mobile along at least one numeric control axis (Y), the saddle (23) being mobile on said carriage (19) along a further numeric control axis (X), said two numeric control axes (X,Y) being horizontal and preferably orthogonal to each other.

7. Device (31) according to claim 4, 5 or 6, wherein said further numeric control axis (X) is an axis of the machine tool or work centre (1) to which said device (31) is associated.

8. Device (31) according to one of the preceding claims, wherein said unloading device (39) includes horizontally sliding bars, associated to rest surfaces (41) on which said bars deposit the worked workpieces (P1).

9. Device (31) according to one of the preceding claims, wherein said unloading device (39) is mobile in a direction substantially parallel to at least one numeric control axis (Y) along which said blocking means (25) moves.

10. Device (31) according to one of the preceding claims, wherein said support (35) for the workpieces (P) is arranged at a greater height than an unloading trajectory of the worked workpieces (P1) performed by said unloading device (39).

11. Device (31) according to claim 10, wherein said blocking means (25) defines a blocking and workpiece (P) height above that of the trajectory of the unloading device (39).

12. Device (31) according to one of the preceding claims, wherein said blocking means (25) is adjustable in height.

13. Device (31) according to one of the preceding claims, wherein said blocking means (25) includes lower vertically movable pushers (25A), which cooperate with upper ledges (25B).

14. Device (31) according to claim 13, wherein said lower pushers (25A) are arranged and controlled to lower the worked workpiece (P1) on said unloading device (39) when said unloading device (39) is placed in an extracted position for receiving the worked workpieces (P1).

15. Device (31) according to one of the preceding claims, wherein said blocking means (25) includes a plurality of horizontally adjustable blocking elements.

16. Device (31) according to claim 10, wherein said blocking means (25) includes two or preferably three blocking devices adjustable at a variable distance.

17. Device (31) according to claim 2 and 15 or 2 and 16, wherein said blocking means is adjustable in a direction orthogonal to said at least one numeric control axis (Y).

18. Device (31), according to claim 15,16 or 17, wherein each of said blocking elements includes a lower mobile pusher (25A) cooperating with an upper ledge (25B).

19. Device (31) according to claim 18, wherein for at least some of the blocking elements the respective upper ledges (25B) are adjustable in height independently one from the other, said ledges being supported by respective uprights (25C).

20. Device (31) according to claims 4 and 19, wherein said uprights (25C) are supported in an adjustable way on said saddle (23).

21. Device (31) according to one of the preceding claims, including opposite vertical reference surfaces to position symmetrical pieces.

22. Device (31) according to claim 21, wherein a first reference surface is defined by the blocking means (25).

23. Device (31) according to claims 19 and 22 wherein a first reference surface is defined by uprights (25C) of the blocking elements

24. Device (31) according to claim 21, 22, or 23, including actuators (51) which push the pieces against said first reference surface.

25. Device (31) according to one of claims 21 to 24, wherein to said blocking elements (25) are associated pushers (57) which push the pieces to work (P) against a second reference surface (51A).

26. Device (31), according to claims 24 and 25, wherein said second reference surface (51A) is integral to said actuators (51), which push the workpiece (P) against the first reference surface.

27. Device (31) according to claim 26, wherein said actuators (51) are piston cylinder actuators, in which the work fluid is kept at different pressures according to which of the two reference surfaces is used to position the workpiece (P).

28. Device (31) according to claim 25, 26 or 27, wherein the pushers (57) associated to the blocking elements take on, when not used, a low profile position in relation to the workpiece (P) and the blocking elements (25).

29. Device (31) according to one of the preceding claims, wherein to said blocking means (25) is associated at least one reference surface (51A), independent from the blocking means (25), designed and arranged in such a way that the workpiece (P) to block is referred to this surface with its own surface to which are referred the working processes to perform on the workpiece (P); the surface of the workpiece (P) to which the working processes to perform are referred remaining fully free to be worked after blocking.

30. Device (31) according to claim 29, wherein to said blocking means (25) are associated pushers (57) to push the workpiece (P) against said surface of reference independent from the blocking means (25).

31. Device (31) according to one of the preceding claims, wherein said blocking means (25) are arranged and controlled such that they retain the workpieces (P) during working thereof.

32. A work centre or machine tool (1) including: at least one work head (11); one support (23, 25) for the workpieces (P), said support (23, 25) and said work head (11) being mobile in relation one to the other according to a plurality of numeric control axes (x,y,z); and a loading device (31) according to one or more of the preceding claims.

## Patentansprüche

1. Ladevorrichtung (31) zum Laden von langen Werkstücken (P) in einen Arbeitsplatz oder in eine Werkzeugmaschine (1) mit einer Kombination aus:
einem Magazin (33) für das zu bearbeitende Werkstück (P);
einem Träger (35) unterhalb dieses Magazins zur Aufnahme eines einzelnen zu bearbeitenden Werkstücks (P) aus dem Magazin (33);
Feststellmitteln (25) zum Feststellen des Werkstücks (P), wobei die Feststellmittel (25) zu dem Magazin (33) bewegbar sind, um sich an dieses anzunähern und das zu bearbeitende Werkstück (P) aus dem Träger (35) herauszunehmen und um sich von diesem weg zu bewegen und die zu bearbeitenden Werkstücke (P) in Richtung auf einen Arbeitsbereich zu transportieren und die bearbeiteten Werkstücke (P1) aus dem Arbeitsbereich heraus zu bewegen;
einer Entladevorrichtung (39), die die bearbeiteten Werkstücke (P1) aus den Feststellmitteln (25) herausnehmen kann und um diese in einen Bereich zu transportieren, aus welchem die bearbeiteten Werkstücke (P1) entfernt werden können.

2. Vorrichtung (31) nach Anspruch 1, wobei die Feststellmittel (25) entlang wenigstens einer numerischen Steuerachse (Y) bewegbar sind.

3. Vorrichtung (31) nach Anspruch 2, wobei diese numerische Steuerachse eine der numerischen Steuerachsen der Werkzeugmaschine oder des Arbeitsplatzes (1) ist, der oder dem die Vorrichtung zugeordnet ist.

4. Vorrichtung (31) nach einem der vorstehenden Ansprüche, wobei die Feststellmittel (25) durch einen Querschlitten (23) gehalten sind, der entlang wenigstens einer numerischen Steuerachse (X; Y) bewegbar ist. _

5. Vorrichtung (31) nach Anspruch 4, wobei die Feststellmittel (25) eine Werkstück-Blockierposition in zum Querschlitten (23) angehobener Relation definieren, um den Zusammenstoß von Werkzeugen eines Aufspannkopfes mit dem Querschlitten (23) zu verhindern.

6. Vorrichtung (31) nach Anspruch 4 oder 5, wobei der Querschlitten (23) auf einem Wagen (19) getragen wird, wobei der Wagen (19) entlang wenigstens einer numerischen Steuerachse (Y) bewegbar ist, der Querschlitten (23) auf dem Wagen (19) entlang einer weiteren numerischen Steuerachse (X) bewegbar ist, wobei die zwei numerischen Steuerachsen (X, Y) horizontal und vorzugsweise rechtwinklig zueinander liegen.

7. Vorrichtung (31) nach Anspruch 4, 5 oder 6, wobei die weitere numerische Steuerachse (X) eine Achse der Werkzeugmaschine oder des Arbeitsplatzes (1) ist, der oder dem die Vorrichtung (31) zugeordnet ist.

8. Vorrichtung (31) nach einem der vorstehenden Ansprüche, wobei die Entladevorrichtung (39) horizontale Führungsstangen aufweist, die den Auflageflächen (41) zugeordnet sind, auf welchen die Stangen das bearbeitete Werkstück (P1) ablegen.

9. Vorrichtung (31) nach einem der vorstehenden Ansprüche, wobei die Entladevorrichtung (39) in einer Richtung im Wesentlichen parallel zu wenigstens einer numerischen Steuerachse (Y), entlang welcher sich die Feststellmittel (25) bewegen, beweglich ist.

10. Vorrichtung (31) nach einem der vorstehenden Ansprüche, wobei der Träger (35) für die Werkstücke (P) in einer größeren Höhe als die Entladebahn der bearbeiteten Werkstücke (P1) ist, die durch die Entladevorrichtung (39) ausgeübt wird.

11. Vorrichtung (31) nach Anspruch 10, wobei die Feststellmittel (25) eine Feststellung und eine Bearbeitungshöhe des Werkstücks (P) oberhalb der Bahn der Entladevorrichtung (39) definieren.

12. Vorrichtung (31) nach einem der vorstehenden Ansprüche, wobei die Feststellmittel (25) in der Höhe einstellbar sind.

13. Vorrichtung (31) nach einem der vorstehenden Ansprüche, wobei die Feststellmittel (25) untere vertikal bewegbare Stößel (25A) aufweisen, die mit oberen Leisten (25B) zusammenwirken.

14. Vorrichtung (31) nach Anspruch 13, wobei die unteren Stößel (25A) so angeordnet und gesteuert sind, dass sie das bearbeitete Werkstück (P1) auf die Entladevorrichtung (39) absenken, wenn die Entladevorrichtung (39) in einer ausgezogenen Position zum Aufnehmen der bearbeiteten Werkstücke (P1) platziert ist.

15. Vorrichtung (31) nach einem der vorstehenden Ansprüche, wobei die Feststellmittel (25) eine Anzahl von horizontal einstellbaren Feststellelementen aufweisen.

16. Vorrichtung (31) nach Anspruch 10, wobei die Feststellmittel (25) zwei oder vorzugsweise drei Feststelleinrichtungen aufweisen, die in einem variablen Abstand einstellbar sind.

17. Vorrichtung (31) nach Anspruch 2 und 15 oder 2 und 16, wobei die Feststellmittel in einer Richtung rechtwinklig zu der wenigstens einen numerischen Steuerachse (Y) einstellbar sind.

18. Vorrichtung (31) nach Anspruch 15, 16 oder 17, wobei jedes der Feststellelemente einen unteren mobilen Stößel (25A) aufweist, der mit einer oberen Leiste (25B) zusammenwirkt.

19. Vorrichtung (31) nach Anspruch 18, wobei für wenigstens einige der Feststellelemente die jeweils oberen Leisten (25B) unabhängig voneinander in der Höhe einstellbar sind, wobei die Leisten durch entsprechende Pfosten (25C) gehalten werden.

20. Vorrichtung (31) nach Anspruch 4 und 19, wobei die Pfosten (25C) auf dem Querschlitten (23) einstellbar gehalten sind.

21. Vorrichtung (31) nach einem der vorstehenden Ansprüche, mit einander gegenüberliegenden vertikalen Referenzflächen zum Positionieren symmetrischer Teile.

22. Vorrichtung (31) nach Anspruch 21, wobei die erste Referenzfläche durch die Feststellmittel (25) definiert ist.

23. Vorrichtung (31) nach Anspruch 19 und 22, wobei eine erste Referenzfläche durch Pfosten (25C) der Feststellelemente definiert ist.

24. Vorrichtung (31) nach Anspruch 21, 22 oder 23 mit Betätigungselementen (51), die die Stücke gegen die erste Referenzfläche drücken.

25. Vorrichtung (31) nach einem der Ansprüche 21 bis 24, wobei den Feststellmitteln (25) Stößel (57) zugeordnet sind, die die zu bearbeitenden Werkstücke (P) gegen eine zweite Referenzfläche (51A) drücken.

26. Vorrichtung (31) nach Anspruch 24 und 25, wobei die zweite Referenzfläche (51A) einstückig mit den Betätigungselementen (51) ist, die das Werkstück (P) gegen die erste Referenzfläche drücken.

27. Vorrichtung (31) nach Anspruch 26, wobei die Betätigungselemente (51) Kolben-Zylinder-Betätigungselemente sind, in welchen das Arbeitsfluid mit unterschiedlichen Drucken gehalten ist, gemäß welchen die zwei Referenzflächen verwendet werden, um das Werkstück (P) zu positionieren.

28. Vorrichtung (31) nach Anspruch 25, 26 oder 27, wobei die den Feststellelementen zugeordneten Stößel (57) im Außerbetriebszustand eine Position einnehmen, die in Relation zu dem Werkstück (P) und den Feststellelementen (25) ein niedriges Profil hat.

29. Vorrichtung (31) nach einem der vorstehenden Ansprüche, wobei den Feststellmitteln (25) wenigstens eine Referenzfläche (51A) unabhängig von den Feststellmitteln (25) zugeordnet sind, die so gestaltet und angeordnet ist, dass das festzustellende Werkstück (P) mit seiner eigenen Fläche, an der die zugeordneten Arbeitsvorgänge an dem Werkstück (P) durchzuführen sind, dieser Fläche zugeordnet ist; wobei die Fläche des Werkstücks (P), an der die Arbeitsvorgänge auszuführen sind, nach der Festlegung vollständig frei für die Bearbeitung bleiben.

30. Vorrichtung (31) nach Anspruch 29, wobei den Feststellmitteln (25) Stößel (57) zugeordnet sind, um das Werkstück (P) gegen diese Referenzfläche unabhängig von den Feststellmitteln (25) zu drücken.

31. Vorrichtung (31) nach einem der vorstehenden Ansprüche, wobei die Feststellmittel (25) so angeordnet und gesteuert sind, dass sie die Werkstücke (P) während ihrer Bearbeitung halten.

32. Arbeitsplatz oder Werkzeugmaschine (1) mit:
wenigstens einem Aufspannkopf (11); einem Träger (23, 25) für die Werkstücke (P), wobei der Träger (23, 25) und der Aufspannkopf (11) zueinander gemäß einer Anzahl von numerischen Steuerachsen (x, y, z) bewegbar sind; und einer Ladevorrichtung (3 1) gemäß einem oder mehreren der vorstehenden Ansprüche.

## Revendications

1. Dispositif (31) de chargement destiné à charger des pièces (P) de grande longueur dans un poste de travail ou machine-outil (1) comprenant en combinaison : un magasin (33) pour les pièces (P) à travailler ; un support (35) au-dessous dudit magasin pour recevoir des pièces unitaires (P) à travailler en provenance du magasin (33) ; des moyens de blocage (25) pour bloquer les pièces (P), lesdits moyens de blocage (25) étant mobiles par rapport au magasin (33) pour se rapprocher de celui-ci et enlever les pièces (P) à travailler à partir du support (35) et s'éloigner de celui-ci et transférer les pièces (P) à travailler vers une zone de travail, et pour enlever les pièces usinées (P1) à partir de ladite zone de travail ; un dispositif de déchargement (39) capable d'enlever les pièces usinées (P1) à partir desdits moyens de blocage (25) et pour les transférer sur une zone à partir de laquelle les pièces usinées (P1) peuvent être enlevées.

2. Dispositif (31) selon la revendication 1, dans lequel lesdits moyens de blocage (25) sont mobiles le long d'au moins un axe de commande numérique (Y).

3. Dispositif (31) selon la revendication 2, dans lequel ledit axe de commande numérique (Y) est l'un des axes de commande numériques de la machine-outil ou du poste de travail (1) auquel est associé le dispositif.

4. Dispositif (31) selon l'une des revendications précédentes, dans lequel lesdits moyens de blocage (25) sont supportés par un chariot (23) qui est mobile le long d'au moins un axe de commande numérique (X ; Y).

5. Dispositif (31) selon la revendication 4, dans lequel lesdits moyens de blocage (25) définissent une position de blocage de pièces relevée par rapport audit chariot (23) pour éviter la collision des outils d'une tête de travail contre ledit chariot (23).

6. Dispositif (31) selon la revendication 4 ou 5, dans lequel ledit chariot (23) est monté sur un support (19), ledit support (19) étant mobile le long d'au moins un axe de commande numérique (Y), le chariot (23) étant mobile sur ledit support (19) le long d'un axe de commande numérique (X) supplémentaire, lesdits deux axes de commande numérique (X, Y) étant horizontaux et, de préférence, orthogonaux l'un par rapport à l'autre.

7. Dispositif (31) selon la revendication 4, 5 ou 6, dans lequel ledit axe de commande numérique (X) supplémentaire est un axe de la machine-outil ou du poste de travail (1) auquel est associé ledit dispositif (31).

8. Dispositif (31) selon l'une des revendications précédentes, dans lequel ledit dispositif de déchargement (39) comprend des barres de coulissement horizontales associées à des surfaces de repos (41) sur lesquelles lesdites barres déposent les pièces usinées (P1).

9. Dispositif (31) selon l'une des revendications précédentes, dans lequel ledit dispositif de déchargement (39) est mobile dans une direction sensiblement parallèle à au moins un axe de commande numérique (Y) le long duquel se déplacent lesdits moyens de blocage (25).

10. Dispositif (31) selon l'une des revendications précédentes, dans lequel ledit support (35) pour les pièces (P) est disposé à plus grande hauteur qu'une trajectoire de déchargement des pièces usinées (P1) effectuée par ledit dispositif de déchargement (39).

11. Dispositif (31) selon la revendication 10, dans lequel lesdits moyens de blocage (25) définissent une hauteur de travail de pièce (P) et blocage au-dessus de la trajectoire du dispositif de déchargement (39).

12. Dispositif (31) selon l'une des revendications précédentes, dans lequel lesdits moyens de blocage (25) sont réglables en hauteur.

13. Dispositif (31) selon l'une des revendications précédentes, dans lequel lesdits moyens de blocage (25) comprennent des poussoirs inférieurs mobiles verticalement (25A) qui coopèrent avec des bords supérieurs (25B).

14. Dispositif (31) selon la revendication 13, dans lequel lesdits poussoirs inférieurs (25A) sont disposés et commandés pour abaisser la pièce usinée (P1) sur ledit dispositif de déchargement (39) lorsque ledit dispositif de déchargement (39) est placé dans une position sortie pour recevoir les pièces usinées (P1).

15. Dispositif (31) selon l'une des revendications précédentes, dans lequel lesdits moyens de blocage (25) comprennent une pluralité d'éléments de blocage réglables horizontalement.

16. Dispositif (31) selon la revendication 10, dans lequel lesdits moyens de blocage (25) comprennent deux ou, de préférence, trois dispositifs de blocage réglables selon une distance variable.

17. Dispositif (31) selon la revendication 2 et 15
ou 2 et 16, dans lequel lesdits moyens de blocage sont réglables dans une direction orthogonale par rapport audit au moins un axe de commande numérique (Y).

18. Dispositif (31) selon la revendication 15, 16
ou 17, dans lequel chacun desdits éléments de blocage comprend un poussoir inférieur mobile (25A) coopérant avec un bord supérieur (25B).

19. Dispositif (31) selon la revendication 18, dans lequel, pour au moins certains des éléments de blocage, les bords supérieurs respectifs (25B) sont ajustables en hauteur indépendamment l'un de l'autre, lesdits bords étant supportés par des montants respectifs (25C).

20. Dispositif (31) selon les revendications 4 et 19, dans lequel lesdits montants (25C) sont supportés d'une manière réglable sur ledit chariot (23).

21. Dispositif (31) selon l'une des revendications précédentes, comprenant des surfaces de référence verticales opposées pour positionner des pièces symétriques.

22. Dispositif (31) selon la revendication 21, dans lequel une première surface de référence est définie par les moyens de blocage (25).

23. Dispositif (31) selon les revendications 19 et 22, dans lequel une première surface de référence est définie par les montants (25C) des éléments de blocage.

24. Dispositif (31) selon la revendication 21, la revendication 22 ou la revendication 23, comprenant des éléments d'actionnement (51) qui poussent les pièces contre la première surface de référence.

25. Dispositif (31) selon l'une des revendications 21 à 24, dans lequel lesdits éléments de blocage (25) sont des poussoirs associés (57) qui poussent les pièces (P) à travailler contre une seconde surface de référence (51A).

26. Dispositif (31) selon les revendications 24 et 25, dans lequel ladite seconde surface de référence (51A) est solidaire desdits éléments d'actionnement (51) qui poussent la pièce (P) contre la première surface de référence.

27. Dispositif (31) selon la revendication 26, dans lequel lesdits éléments d'actionnement (51) sont des éléments d'actionnement à cylindre à piston, dans lequel le fluide de travail est maintenu à différentes pressions selon laquelle des deux surfaces de référence est utilisée pour positionner la pièce (P).

28. Dispositif (31) selon la revendication 25, 26
ou 27, dans lequel les poussoirs (57) associés aux éléments de blocage prennent, lorsqu'ils ne sont pas utilisés, une position de profil basse par rapport à la pièce (P) et aux éléments de blocage (25).

29. Dispositif (31) selon l'une des revendications précédentes, dans lequel auxdits moyens de blocage (25) est associée au moins une surface de référence (51A), indépendante des moyens de blocage (25), conçue et disposée de telle manière que la pièce (P) à bloquer est référée à cette surface par sa propre surface à laquelle sont référées les opérations de travail à effectuer sur la pièce (P) ; la surface de la pièce (P) à laquelle les opérations de travail à effectuer sont référées restant entièrement libre à usiner après blocage.

30. Dispositif (31) selon la revendication 29, dans lequel auxdits moyens de blocage (25) sont associés des poussoirs (57) pour pousser la pièce (P) contre ladite surface de référence indépendante des moyens de blocage (25).

31. Dispositif (31) selon l'une des revendications précédentes, dans lequel lesdits moyens de blocage (25) sont disposés et commandés de telle sorte qu'ils retiennent les pièces (P) pendant leur usinage.

32. Poste de travail ou machine-outil (1) comprenant : au moins une tête de travail (11) ; un support (23, 25) pour les pièces (P), ledit support (23, 25) et ladite tête de travail (11) étant mobiles l'un par rapport à l'autre selon une pluralité d'axes de commande numérique (X, Y, Z) ; et un dispositif de chargement (31) selon une ou plusieurs des revendications précédentes.
